Europäisches Patentamt

European Patent Office

Office européen des brevets

(11) Veröffentlichungsnummer: **0 254 159**
**A1**

## (12) EUROPÄISCHE PATENTANMELDUNG

(21) Anmeldenummer: 87110000.4

(22) Anmeldetag: 10.07.87

(51) Int. Cl.⁴: **B23K 9/02** , B23K 37/02 , B23K 9/28

(30) Priorität: 23.07.86 DE 3624840

(43) Veröffentlichungstag der Anmeldung:
27.01.88 Patentblatt 88/04

(84) Benannte Vertragsstaaten:
BE CH DE ES FR GB LI SE

(71) Anmelder: **Siemens Aktiengesellschaft Berlin und München**
**Wittelsbacherplatz 2**
**D-8000 München 2(DE)**

(72) Erfinder: **Mollwitz, Klaus**
**Am Europakanal 12**
**D-8520 Erlangen(DE)**

(54) **Vorrichtung zum Einbüchsen radioaktiven Materials.**

(57) Eine Vorrichtung zum Einbüchsen radioaktiven Materials hat zum Erzielen einer gleichmäßig zwischen einem Behälter (1) und einem Deckel (2) verteilten Schweißnaht (3) eine Schweißelektrode (6), die in einer Wippe (7) mit Rückstellfeder (17) und einer Radialabtastrolle (5) zum Anliegen am Behälter (1) und einer Axialabtastrolle (4) zum Anliegen am Deckel (2) gelagert ist und ihn geradlinig in zwei verschiedenen Richtungen jeweils gegen Rückstellfedern (12) und (27) in einer durch die Schweißspitze (6a) der Schweißelektrode (6) und einer Drehachse (15) für den Behälter (1) bestimmten Schweißebene verschiebbar ist.

FIG 1

EP 0 254 159 A1

## Vorrichtung zum Einbüchsen radioaktiven Materials

Die Erfindung betrifft eine Vorrichtung zum Einbüchsen einer radioaktiven Substanz entsprechend dem Gattungsbegriff des Patentanspruchs 1.

In einer solchen Vorrichtung kann die Schweißelektrode mit einem Stellmotor über ein Getriebe auf die Schweißnaht zu und von der Schweißnaht weg bewegt werden. Die Steuerung des Stellmotors erfolgt in Abgängigkeit von der Lichtbogenspannung mit einer elektronischen Steuervorrichtung.

Da der Mantel des Behälters in der Regel von seiner geometrischen Sollform etwas abweicht und die Mittelachse des Behälters in der Regel nicht ganz mit der Drehachse fluchtet, kommt es zu undefinierten Sprüngen des Lichtbogens zwischen der Schweißspitze und dem Schweißgut, so daß die Schweißnaht sich über den Umfang des Mantels mal mehr zum Deckel, mal mehr zum Mantel des Gefäßes hin verlagert. Dies kann die Festigkeit der Schweißnaht beeinflussen.

Der Erfindung liegt die Aufgabe zugrunde, hier Abhilfe zu schaffen und eine gleichmäßig zwischen Deckel und Mantel des Gefäßes verteilte Schweißnaht zu erzielen.

Zur Lösung dieser Aufgabe hat eine Vorrichtung der eingangs erwähnten Art erfindungsgemäß die Merkmale des kennzeichnenden Teiles des Patentanspruchs 1.

Die Abtastrollen und die Rückstellfedern der erfindungsgemäßen Vorrichtung bewirken, daß Abweichungen in der Rundheit des Mantels des Gefäßes und Abweichungen der Drehachse für dieses Gefäß von seiner Mittelachse automatisch und unmittelbar auf die Schweißelektrode durch den sich drehenden Mantel des Gefäßes übertragen werden, so daß sich diese Schweißelektrode gewissermaßen selbsttätig am Mantel des Gefäßes justiert. Dies führt zu einem ständig gleichbleibenden Abstand der Schweißspitze der Schweißelektrode zur Schweißnaht und damit zu einer gleichmäßigen Verteilung der Schweißnaht auf den Deckel und den Mantel des Behälters.

Vorteilhafte Weiterbildungen der erfindungsgemäßen Vorrichtung sind Gegenstand der Patentansprüche 2 bis 4.

Die Erfindung und ihre Vorteile seien anhand der Zeichnung an einem Ausführungsbeispiel näher erläutert:

Fig. 1 zeigt eine Seitenansicht einer erfindungsgemäßen Vorrichtung,

Fig. 2 zeigt eine schräge Draufsicht auf die Vorrichtung in Richtung des Pfeiles II in Fig. 1.

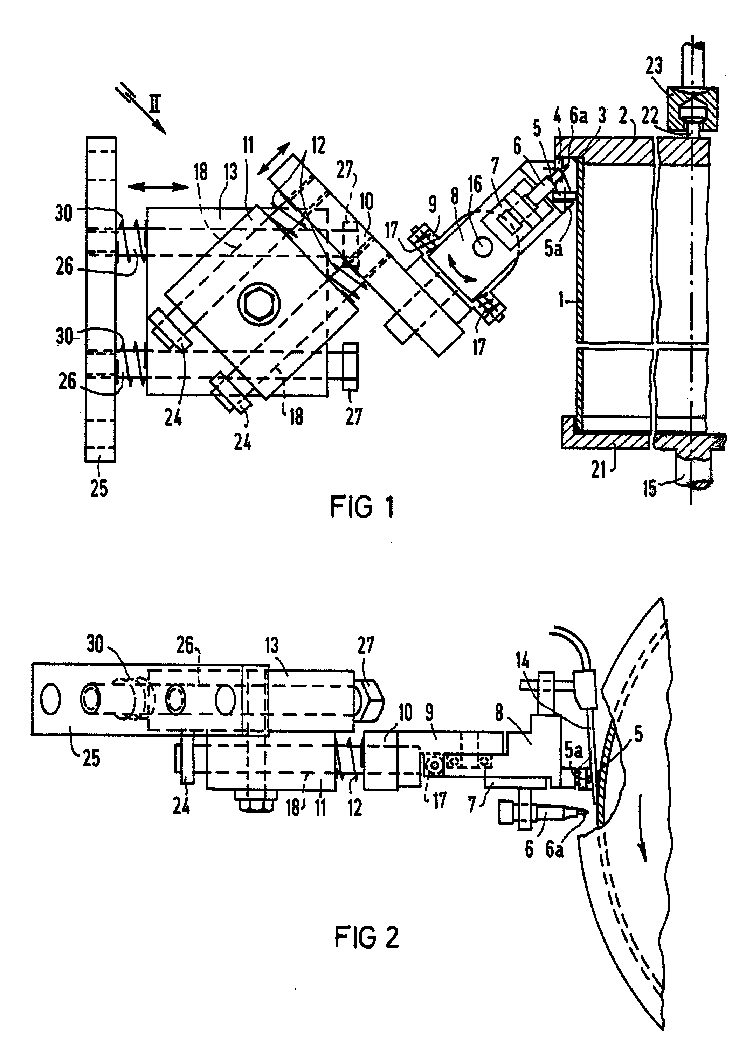

In den Figuren 1 und 2 ist ein hohlzylinderförmiger Behälter 1 aus Stahl dargestellt, in den radioaktives Material eingebüchst werden soll. Dieser hohlzylinderförmige Behälter 1 ist an seiner Öffnung mit einem Deckel 2 aus Stahl verschlossen, der überall an der Außenseite des Mantels des Behälters 1 übersteht. Der Behälter 1 ist auf einem Drehteller 21 positioniert, mit dem er um eine Drehachse 15 gedreht wird. Diese Drehachse 15 wird vom Mantel des Behälters 1 umschlossen und soll möglichst genau mit der Mittelachse des Behälters 1 fluchten. Auf der Oberseite des Deckels 2 ist im Zentrum ein Haltezapfen 22 angebracht, der in einen ortsfesten Führungskörper 23 greift und sich in diesem ortsfesten Führungskörper 23 um die Drehachse 15 drehen kann.

Eine langgestreckte Schweißelektrode 6 befindet sich in einer Schweißebene, die durch die Schweißspitze 6a dieser Schweißelektrode 6 und die Drehachse 15 bestimmt ist. Diese Schweißelektrode 6 ist starr an einer Wippe 7 befestigt, die ihrerseits in einem Haltekörper 8 um eine Wippenachse 16 drehbar gelagert ist. Die Wippenachse 16 ist zu der Schweißebene rechtwinklig, in der sich die Drehachse 15 des Behälters 1 und die Schweißspitze 6a der Schweißelektrode 6 befinden. Am Haltekörper 8 und an der Wippe 7 sind jeweils mit einem Federende zwei aus Schraubenfedern bestehende Rückstellfedern 17 befestigt, gegen die eine Hin-und Herbewegung der Wippe 7 um die Wippenachse 16 und um eine Ausgangsstellung der Wippe 7 erfolgen kann.

Der Haltekörper 8 für die Wippe 7 ist an einem Führungsarm 10 starr befestigt, der seinerseits mit zwei in der Schweißebene befindlichen, zueinander parallelen Säulen 18 versehen ist. Diese Säulen 18 greifen in einen Führungskörper 11, der seinerseits starr an einem Trägerkörper 13 angebracht ist und in dem diese Säulen 18 in ihrer Längsrichtung geradlinig verschiebbar und mit Gegenringen 24 gesichert sind.

Auf den beiden Säulen 18 sitzt zwischen Führungsarm 10, an dem die Säulen 18 starr befestigt sind, und Führungskörper 11 je eine aus einer Schraubenfeder bestehende Rückstellfeder 12, die sich am Führungsarm 10 einerseits und am Führungskörper 11 andererseits abstützt.

Zwei an einem Traggestell 25 starr befestigte, zueinander parallele Säulen 26, befinden sich in einer zur Schweißebene parallelen Ebene und sind rechtwinklig zur Drehachse 15. Sie greifen durch den Trägerkörper 13, der auf ihnen rechtwinklig zur Drehachse 15 geradlinig verschiebbar und mit Gegenringen 30 gesichert ist. Auf jeder der beiden Säulen 26 sitzt zwischen Trägerkörper 13 und Traggestell 25 ebenfalls je eine aus einer Schraubenfeder bestehende Rückstellfeder 30, die sich am Traggestell 25 einerseits und am Trägerkörper 13 andererseits abstützt.

An der Wippe 7 ist eine Radialabtastrolle 5 um eine Drehachse 5a drehbar angebracht, die sich in der Schweißebene befindet und parallel zur Drehachse 15 ist. Ferner ist an der Wippe 7 eine Axialabtastrolle 4 um eine Drehachse 4a drehbar angebracht, die sich in der Schweißebene befindet und die rechtwinklig zur Drehachse 5a der Radialabtastrolle 5 und zur Drehachse 15 ist. Zwischen der Axialabtastrolle 4 und der Radialabtastrolle 5 befindet sich die langgestreckte Schweißelektrode 6 mit ihrer Schweißspitze 6a, an der ein elektrischer Lichtbogen zwischen der Schweißspitze 6a und der Schweißnaht 3 zwischen dem Deckel 2 und dem Behälter 1 erzeugt wird.

Mit dem Traggestell 25 wird die Vorrichtung unter Wasser innerhalb einer mit Schutzgas gefüllten Glocke, in der sich auch die Öffnung des Behälters 1 mit dem Deckel 2 befindet, in der in den Figuren 1 und 2 dargestellten Konfiguration so positioniert, daß die Rückstellfedern 12 und 30 auf Druck beansprucht sind und die Radialabtastrolle 5 gegen die Außenseite des Mantels des Behälters 1 und die Axialabtastrolle 4 gegen die Unterseite des Deckels 2 gepreßt werden, an der dieser Deckel 2 mit dem Behälter 1 verschweißt werden soll. Wird der Behälter 1 während des Schweißvorganges in Umdrehung um die Drehachse 15 versetzt, so wird die Schweißelektrode 6 mit ihrer Schweißspitze 6a unter Einwirkung von Radialabtastrolle 5 und Axialabtastrolle 6 sowie der Rückstellfedern 17, 12 und 27 selbsttätig so justiert, daß die Schweißspitze 6a der Schweißelektrode 6 immer gleichbleibenden Abstand von der Außenseite des Mantels des Behälters 1 sowie von der Unterseite des Deckels 2 und damit auch von der Schweißnaht 3 zwischen dem Behälter 1 und dem Deckel 2 hat. Damit ergibt sich eine über den Umfang des Mantels des Behälters 1 gleichmäßig auf den Deckel 2 und den Mantel des Behälters 1 verteilte Schweißnaht 3.

Der Schweißelektrode 6 kann zusätzlich noch ein in Abhängigkeit von der Lichtbogenspannung zwischen der Schweißspitze 6a und der Schweißnaht 3 gesteuerter elektrischer Stellmotor zugeordnet sein, der die Schweißspitze 6a geradlinig auf die Schweißnaht 3 zu-oder geradlinig von der Schweißnaht 3 wegbewegen kann und noch zusätzlich für einen konstanten Abstand zwischen der Schweißspitze 6a und der Schweißnaht 3 beim Schweißen während der Umdrehung des Behälters 1 um die Drehachse 15 sorgt, es hat sich aber herausgestellt, daß dadurch die Qualität der Schweißnaht 3 in der Regel nicht mehr entscheidend verbessert wird. Deshalb kann ein solcher Stellmotor, der mit seinen elektrischen Zuleitungen und elektronischen Stellwertmeldern sehr sensitiv für radioaktive Strahlung ist, in der Regel entfallen, so daß der Wartungsaufwand für die dargestellte Vorrichtung gering ist.

## Ansprüche

1. Vorrichtung zum Einbüchsen radioaktiven Materials in einen einen Mantel aufweisenden Behälter mit einer verschiebbaren Schweißelektrode zum Festschweißen eines Deckels an einer Behälteröffnung an einem Mantelende und mit einer Schweißspitze an der Schweißelektrode, die mit einer vom Mantel umschlossenen Drehachse für den Behälter eine Schweißebene bestimmt,
**dadurch gekennzeichnet,**
daß die Schweißelektrode (6) an einer Wippe (7) angebracht ist, die in einem in der Schweißebene in einer ersten Richtung geradlinig gegen eine erste Rückstellfeder 12 verschiebbaren Haltekörper (8) um eine zur Schweißebene rechtwinklige Wippenachse (16) gegen eine zweite Rückstellfeder (17) drehbar gelagert ist,
daß die Wippe (7) eine Radialabtastrolle (5) zum Anliegen an der Außenseite des Mantels des Behälters (1) und eine Axialabtastrolle (4) zum Anliegen am Deckel (2) aufweist,
daß die zur Drehachse (15) für den Behälter (1) parallele Drehachse (5a) der Radialabtastrolle (5) und die Drehachse (4a) der Axialabtastrolle (4) in der Schweißebene liegen und miteinander einen Winkel kleiner als 180° bilden und
daß der Haltekörper (8) mit der Wippe (7) zusätzlich in einer zweiten von der ersten Richtung abweichenden Richtung gegen eine dritte Rückstellfeder (27) geradlinig verschiebbar ist.

2. Vorrichtung nach Anspruch 1,
**dadurch gekennzeichnet,**
daß die Drehachse (5a) der Radialabtastrolle (5) und die Drehachse (4a) der Axialabtastrolle (4) zueinander rechtwinklig sind.

3. Vorrichtung nach Anspruch 1,
**dadurch gekennzeichnet,**
daß die von der ersten Richtung abweichende zweite Richtung, in der der Haltekörper (8) mit der Wippe (7) zusätzlich gegen eine dritte Rückstellfeder (27) in der Schweißebene geradlinig verschiebbar ist, rechtwinklig zur Drehachse (15) für den Behälter (1) ist.

4. Vorrichtung nach Anspruch 1,
**dadurch gekennzeichnet,**
daß ein Zuführrohr (14) für einen Schweißzusatz starr an der Wippe (7) angebracht ist.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 123 750 (LICENTIA PATENT-VERWALTUNGS GmbH) * Insgesamt * | 1 | B 23 K 9/02 B 23 K 37/02 B 23 K 9/28 |
| A | FR-A-2 300 651 (MESSER GRIESHEIM GmbH) * Seite 4, Zeile 33 - Seite 5, Zeile 10; Figur 1 * | 1 | |
| A | DE-C- 687 427 (SIEMENS-SCHUCKERTWERKE) * Insgesamt * | 1,2 | |
| A | US-A-2 726 619 (TRAUGOTT TSCHUDI) * Spalte 2, Zeilen 15-32; Spalte 3, Zeilen 5-61; Figuren 1,2 * | 1,3 | |
| A | US-A-3 536 879 (E.N. HARTSELL) * Spalte 3, Zeilen 54-70; Spalte 4, Zeilen 3-16; Figuren 2-4 * | 1,4 | RECHERCHIERTE SACHGEBIETE (Int. Cl.4) B 23 K G 21 C |

Der vorliegende Recherchenbericht wurde für alle Patentansprüche erstellt.

| Recherchenort | Abschlußdatum der Recherche | Prüfer |
|---|---|---|
| DEN HAAG | 27-10-1987 | ARAN D.D. |